# EUROPÄISCHE PATENTSCHRIFT

(11) **EP 3 460 336 B1**
(45) Veröffentlichungstag und Bekanntmachung des Hinweises auf die Patenterteilung: **01.12.2021**
(21) Anmeldenummer: 18195705.1
(22) Anmeldetag: 20.09.2018
(51) Int. Cl.: F24C 15/04, F24C 7/08

(54) **GARGERÄT, INSBESONDERE GEWERBLICHES GARGERÄT**
COOKING DEVICE, IN PARTICULAR COMMERCIAL COOKING DEVICE
APPAREIL DE CUISSON, EN PARTICULIER APPAREIL DE CUISSON INDUSTRIEL

(30) Priorität: 22.09.2017 DE 102017216855; 05.02.2018 DE 102018201743
(43) Veröffentlichungstag der Anmeldung: 27.03.2019
(73) Patentinhaber: WELBILT Deutschland GmbH, 82436 Eglfing (DE)
(72) Erfinder: WILD, Hannes, 82418 Riegsee (DE); SMITS, Stan, 82362 Weilheim (DE); FISCHHABER, Herbert, 82380 Peißenberg (DE)
(74) Vertreter: Hoefer & Partner Patentanwälte mbB

(56) Entgegenhaltungen:
- EP-A1- 2 515 044
- EP-A1- 2 520 169
- WO-A1-2005/077556
- WO-A1-2018/153690
- WO-A2-03/081285
- DE-A1- 19 705 697
- JP-A- 2008 304 132
- US-A1- 2017 261 213

## Beschreibung

Die Erfindung betrifft ein Gargerät, insbesondere in Form eines gewerblichen Gargeräts, gemäß dem Oberbegriff des Anspruchs 1.

Ein derartiges Gargerät ist in Form eines Backofens aus der EP 2 520 169 A1 bekannt. Bei diesem Gargerät ist eine Kamera in der Garraumtür des Garraums angeordnet, um Bilder von im Garraum befindlichen Gargütern aufzunehmen und diese Bilder einem Bediener zur Verfügung stellen zu können.

Das technische Problem dieses Gargeräts besteht darin, dass die Kamera aufgrund ihrer Positionierung in der Garraumtür zwischen einer Innenscheibe und einer Außenscheibe durch die Wärmestrahlung des Garraums überhitzt werden kann.

Daher ist das bekannte Gargerät vorzugsweise mit einer Mehrzahl von Kühleinrichtungen versehen, die Kühlelemente, Wärmedämmmaterial und Kühlkanäle sowie eine Trennwand umfassen können.

Der Nachteil dieser Anordnung besteht mithin darin, dass zur Vermeidung einer Überhitzung der in der Garraumtür angeordneten Kamera eine Vielzahl von zusätzlichen technischen Vorkehrungen getroffen werden muss, um die erläuterte Überhitzung vermeiden zu können.

Als ein weiterer Nachteil ist hervorzuheben, dass das Anbringen von Kühlkörpern an einem oder mehreren Türblechen die Erfassung von Gargut im Garinnenraum und vor dem Gargerät erschweren kann.

Aus der DE 20 2011 002 570 U1 ist eine Vorrichtung zur Wärmebehandlung von Lebensmitteln bekannt, die zumindest einen Sensor zur Erkennung der Art der Produkte und der Belegung eines Produktträgers mit Produkten aufweist. Dieser Sensor ist vor der Garraumtür außerhalb des Garraums an einer oberhalb der Garraumtür angeordnet. Alternativ ist es möglich, jeder Einschubebene einen Sensor zuzuordnen, der dann über eine entsprechende Datenleitung mit der Steuerung verbunden ist.

Aus der DE 10 2013 114 230 A1 ist ferner ein Gargerät bekannt, auf dessen Oberseite ein Strömungskanal vorgesehen ist, in dem eine Optik, wie beispielsweise eine Kamera, angeordnet werden kann.

Aus der US 2017/261213 A1 ist ein Ofen mit einem Kameramodul bekannt.

Aus der DE 197 05 697 A1 ist ein Haushaltsherd bekannt, der einen Frontrahmen aufweist, der von einer Muffenwandung ringsum einer Beschickungsöffnung beabstandet ist, so dass zwischen dem Frontrahmen und der Muffelwandung ein Zwischenraum gebildet wird, der mit einer wärmeisolierenden Dichtung abgedichtet ist.

Aus der JP 2008304132 A ist ein Gargerät bekannt, das einen Projektionsteil zum Projizieren eines Bildes aufweist, der unterhalb einer Deckplatte angeordnet ist.

Die WO 03/081285 A2 beschreibt ein Gargerät mit einer Vorrichtung zu einer Versatzvisualisierung von Garprodukten.

Aus der WO 2005/077556 A1 ist ein Oberflächenreinigungssystem mit einer fotokatalytischen Schicht bekannt.

Aus der EP 2 515 044 A1 ist ein Garsystem mit einem Gargerät und mit einer Kameraeinrichtung bekannt.

Aus der WO 2018/153690 A1 ist ein Gargerät mit einem in einer Garraumtür angeordneten Sensormodul zum Erkennen von Eigenschaften des Garguts bei Inbetriebstellung befindlicher Tür bekannt.

Es ist Aufgabe der vorliegenden Erfindung, ein Gargerät der im Oberbegriff des Anspruches 1 angegebenen Art zu schaffen, das es möglich macht, Gargut innerhalb des Garraums und Gargut vor dem Einbringen in den Garraum außerhalb von diesem zu beobachten, und dies sowie die Vermeidung einer Überhitzung eines optoelektronischen Sensors des Gargerätes auf eine technisch einfache Art und Weise möglich zu machen.

Die Lösung dieser Aufgabe erfolgt durch die Merkmale der Ansprüche 1 und 2.

Dadurch, dass der optoelektronische Sensor des erfindungsgemäßen Gargeräts im geschlossenen Zustand der Garraumtür in einem Aufnahmebereich der Garraumtür angeordnet ist, der außerhalb der Türdichtung vorgesehen ist, ergibt sich der Vorteil, dass die ohnehin vorgesehene Türdichtung als thermische Abschirmung für den optoelektronischen Sensor verwendet wird, und dass ein Teil des Garraumtürinnenraumes, der ebenfalls ohnehin vorhanden ist, als Aufnahmeraum für den Sensor verwendet werden kann, so dass es bei dem erfindungsgemäßen Gargerät nicht erforderlich ist, irgendwelche zusätzlichen Kühleinrichtungen vorzusehen, um eine Überhitzung des optoelektronischen Sensors zu vermeiden. Ferner ergibt sich der Vorteil, dass es zwischen der Innenscheibe und der Außenscheibe zu einer Luftströmung kommt, die als Kühlströmung für den optoelektronischen Sensor dienen kann, ohne dass hierfür zusätzliche Kühleinrichtungen erforderlich wären.

Hieraus ergibt sich der Vorteil, dass es mit dem erfindungsgemäßen Gargerät möglich ist, ein sog. Stapelkit möglich zu machen, bei dem Gargeräte übereinander angeordnet werden können.

Ferner ergibt sich der Vorteil eines ästhetischen Designs, da keine Anbauteile angebracht werden müssen.

Ferner kann der optoelektronische Sensor sowohl den Garraum als auch den Bereich vor dem Garraum erfassen, und damit das Gargut im Gargerät und das noch zu beschickende Gargut beobachtet werden kann. Dies ergibt die weiteren Vorteile einer erhöhten Prozesssicherheit und eine bessere Qualität durch die zur Verfügungstellung von Kerntemperaturdaten.

Ferner kann eine automatisierte Dokumentation der Prozesse im Ofen und eine erleichterte Compliance mit Hygienevorschriften, wie beispielsweise der "Hygiene-Ampel", HACCP, erreicht werden.

Ferner ist es möglich, eine vereinfachte Warenrückverfolgbarkeit durch Bilddokumentation und eine Verkürzung von Einlernzeiten von neuem Bedienpersonal zu realisieren.

Als ein weiterer Vorteil ist zu sagen, dass es mit dem erfindungsgemäßen Gargerät möglich gemacht wird, eine Dokumentation und Überwachung der beschickten Ware, des Garprozesses und der Garergebnisse durchzuführen.

Als ein weiterer Vorteil ist hervorzuheben, dass das erfindungsgemäße Gargerät kein Kabel in der Garraumtür benötigt, welches durch Scharniere geführt werden müsste, was zum einen eine Beschädigung von Kabeln zur Folge haben könnte und darüber hinaus den Vorteil ergibt, dass die erfindungsgemäße Konstruktion deutlich günstiger ist als diejenige von Konstruktionen, bei denen Kabel in der Tür verlegt werden müssen.

Ferner ergibt sich der Vorteil einer leichteren Wartung im Service-Fall.

Schließlich ist mit dem erfindungsgemäßen Gargerät eine Dokumentation des Zustands des Garraums hinsichtlich Verschmutzung und Hygiene sowie eine Überwachung des Garvorganges im Gargerät in Echtzeit realisierbar.

Schließlich wird es dadurch möglich, Bedienfehler zu minimieren.

Bei einer weiteren besonders bevorzugten Ausführungsform des erfindungsgemäßen Gargerätes ist die Erzeugung einer gerichteten Luftströmung am Garprogrammende möglich. Die gerichtete Luftströmung, welche aus einem Spalt der leicht geöffneten Garraumtür austritt, wird durch eine Drehbewegung des Garraumlüfters erzeugt. Hierbei ist es bevorzugt, dass die Luftströmung situativ auf die jeweiligen vorherrschenden Bedingungen eingesteuert wird. Einflussfaktoren können hierbei der Gerätetyp und die Gerätegröße, das Garraumklima, wie z.B. Temperaturen und Dampfsättigung, die Beschickungsmenge und Einschubpositionen der Bleche wie auch die Türspaltgröße, sein.

Die Steuergrößen für die Erzeugung einer gerichteten Luftströmung können folgende Einflussfaktoren sein:
- Drehrichtung und Drehgeschwindigkeit des Lüfters sowie dessen Anordnung im Garraum (seitlich oder benachbart zur Rückwand);
- Beschleunigungs- und/oder Abbremskurven;
- Vorlaufzeiten vor Garprogrammende sowie Ableitgeometrien und Positionierung beispielsweise von Abweisplatten bzw. Abweisblechen;
- Optional können auch bewegliche Teile vorgesehen sein oder es können Türverschlusssysteme mit verschlossenen Anlüftstellungen der Garraumtür vorgesehen werden.

Durch die oben genannten Maßnahmen ist es möglich, den erzeugten Luftstrom so auszurichten, dass z.B. eine am oder im Gargerät angebrachte Kamera nicht verschmutzt wird, oder die Luftströmung optional in eine auf dem Gerät angebrachte Abzugshaube geleitet wird. Zusätzlich ist es bei einer weiteren besonders bevorzugten Ausführungsform möglich, dass der am Garprogrammende austretende heiße Schwaden nicht in Richtung auf das Bedienpersonal ausströmt, sondern in einen ungefährlichen Bereich oberhalb des Gargerätes abgeleitet wird.

Die Gerätesteuerung kann hierbei vorzugsweise so ausgelegt sein, dass mit dem Öffnen der Garraumtür, beispielsweise in eine Anlüftstellung, der Lüfter nicht sofort ausgeschaltet, sondern über eine gewisse Nachlaufzeit weiter betrieben wird, um die gerichtete Strömung der abzuleitenden Schwaden, vorzugsweise im Zusammenwirken mit Strömungsleiteinrichtungen, erzeugen zu können. Eine derartige Nachlaufzeit des Lüfters kann in der Gerätesoftware implementiert werden.

Durch diese Maßnahmen ist es vorzugsweise möglich, undefinierte Luft- bzw. Schwadenströme am Ende eines Garprogrammes zu verhindern, die teilweise durch am Aufstellort vorherrschende externe Luftströmungen (Haubentechnik, geöffnete Fenster des Aufstellraumes, etc.) entstehen können.

Die Unteransprüche haben vorteilhafte Weiterbildungen der Erfindung zum Inhalt.

Weitere Einzelheiten, Vorteile und Merkmale ergeben sich aus nachfolgender Beschreibung von Ausführungsbeispielen anhand der Zeichnung. Darin zeigt:
- Fig. 1: eine schematisch stark vereinfachte perspektivische Darstellung einer ersten Ausführungsform des erfindungsgemäßen Gargeräts mit geschlossener Garraumtür,
- Fig. 2: eine der Fig. 1 entsprechende Darstellung bei geöffneter Garraumtür,
- Fig. 3: eine schematisch stark vereinfachte, teilweise geschnittene Prinzipdarstellung eines Teils einer zweiten Ausführungsform des erfindungsgemäßen Gargeräts,
- Fig. 4: eine der Fig. 3 entsprechende Darstellung einer dritten Ausführungsform des erfindungsgemäßen Gargeräts,
- Fig. 5: eine den Fig. 3 und 4 entsprechende Darstellungen einer vierten Ausführungsform des erfindungsgemäßen Gargeräts,
- Fig. 6: eine den Fig. 3 bis 5 entsprechende Darstellung einer fünften Ausführungsform des erfindungsgemäßen Gargeräts,
- Fig. 7: eine der Fig. 1 entsprechende Darstellung einer sechsten Ausführungsform des erfindungsgemäßen Gargeräts,
- Fig. 8: eine den Fig. 3, 4, 5 und 6 entsprechende Darstellung einer siebten Ausführungsform des erfindungsgemäßen Gargeräts,
- Fig. 9: eine der Fig. 1 entsprechende Darstellung einer achten Ausführungsform des erfindungsgemäßen Gargeräts,
- Fig. 10: eine schematisch stark vereinfachte Prinzipdarstellung einer Draufsicht auf eine neunte Ausführungsform des erfindungsgemäßen Gargeräts,
- Fig. 11: eine der Fig. 1 entsprechende Darstellung einer zehnten Ausführungsform des erfindungsgemäßen Gargeräts,
- Fig. 12: eine der Fig. 3 entsprechende Darstellung eines Teils einer weiteren Ausführungsform des erfindungsgemäßen Gargeräts,
- Fig. 13: eine der Fig. 12 entsprechende Darstellung des Gargeräts bei leicht geöffneter Garraumtür, und
- Fig. 14 bis 16: schematisch stark vereinfachte Prinzipdarstellungen weiterer besonders bevorzugter Ausführungsformen von Abweis- bzw. Umlenkeinrichtungen des erfindungsgemäßen Gargeräts zum Schutz einer Kamera, einer Optik oder eines Sensors des erfindungsgemäßen Gargeräts.

Bevor im Einzelnen auf die Prinzipien der vorliegenden Erfindung eingegangen wird, sei betont, dass im Rahmen dieser Anmeldung unter dem Begriff "Gargerät" sowohl gewerbliche Gargeräte wie auch Haushalts-Gargeräte und insgesamt ganz allgemein Nahrungsmittel-Behandlungs-Geräte verstanden werden, die sowohl eine kalte wie auch eine heiße Behandlung von Nahrungsmittel durchführen können und beispielsweise Heißluftdämpfer, Kombi-Dämpfer, Getränke-Ausgabe-Automaten, Getränke-Mixer, Mikrowellen-Geräte und andere Nahrungsmittel-Behandlungs-Geräte umfassen können.

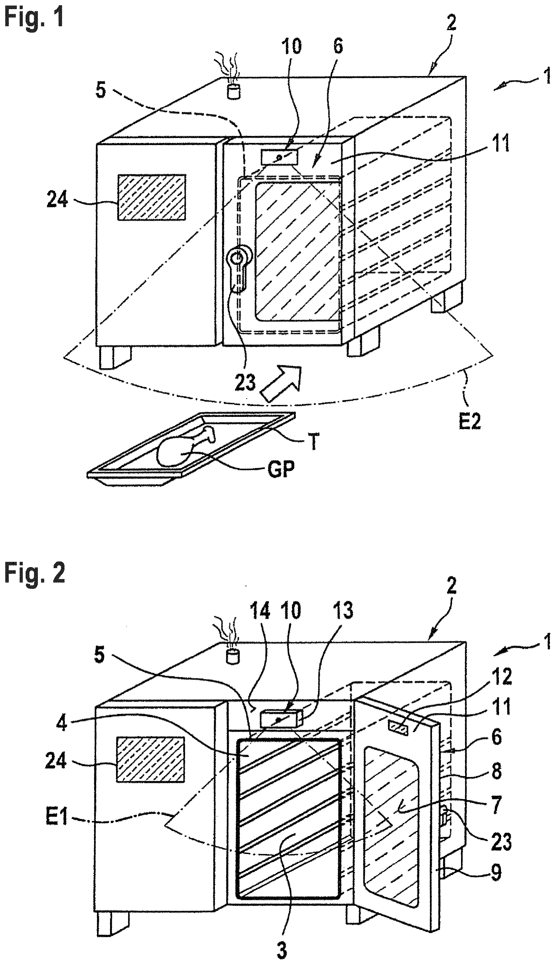

In Fig. 1 ist in schematisch stark vereinfachter Darstellung ein erfindungsgemäßes Gargerät 1 dargestellt, das ein Gehäuse 2 aufweist. Im Gehäuse 2 ist ein Garraum 3 angeordnet, der in Fig. 2 sichtbar ist und der eine Garraumöffnung 4 aufweist, die ebenfalls aus der Darstellung der Fig. 2 mit geöffneter Garraumtür 6 sichtbar ist. Die Garraumöffnung 4 kann mittels der Garraumtür 6 geöffnet und geschlossen werden, um beispielsweise auf einem Gargutträger T angeordnetes Gargut GP in den Garraum 3 einbringen oder, nach dem Garprozess, aus dem Garraum 3 herausnehmen zu können.

Die Fig. 1 und 2 verdeutlichen ferner die Anordnung einer Türdichtung 5, die eine um die vier Seiten der Garraumöffnung 4 umlaufende Türdichtung ist, was sich insbesondere aus der Darstellung der Fig. 2 mit geöffneter Garraumtür 6 erschließt. Im dargestellten Beispielsfall ist die Türdichtung 5 auf einem der Garraumöffnung 4 benachbarten Gehäusebereich angeordnet. Alternativ kann die Türdichtung 5 auch auf der Türinnenseite angebracht sein.

Aus Fig. 2 wird ferner deutlich, dass die Garraumtür 6 eine dem Garraum 3 benachbarte Innenscheibe 7 aufweist, die im geschlossenen Zustand der Garraumtür 6 an der Türdichtung 5 anliegt. Ferner weist die Garraumtür 6 eine zur Innenscheibe 7 beabstandete Außenscheibe 8 auf, die mit der Innenscheibe 7 einen Garraumtürinnenraum 9 begrenzt.

Die erste Ausführungsform des erfindungsgemäßen Gargeräts 1 gemäß den Fig. 1 und 2 weist ferner einen schematisch stark vereinfacht dargestellten optoelektronischen Sensor 10 auf, der im geschlossenen Zustand der Garraumtür 6 gemäß Fig. 1 in einem Aufnahmebereich 11 des Gartürinnenraums 9 angeordnet ist, der außerhalb der Türdichtung 5 angeordnet ist. Die Türdichtung 5 ist hierbei aufgrund der geschlossenen Garraumtür 6 in Fig. 1 strichliert verdeutlicht, während sie in Fig. 2 aufgrund des geöffneten Zustands der Garraumtür 6 in ihrer Gesamtheit als die beschriebene umlaufende Türdichtung 5 sichtbar ist, wobei sowohl die Fig. 1 als auch die Fig. 2 verdeutlichen, dass, aufgrund der in diesen Figuren gewählten Darstellung, in diesem Falle der Sensor 10 oberhalb der Türdichtung 5 angeordnet ist, so dass die Türdichtung 5, die ein ohnehin vorgesehenes Bauteil darstellt, als thermische Abschirmung für den im Aufnahmebereich 11 angeordneten Sensor 10 fungieren kann.

Der Aufnahmebereich 11 kann ferner mit einem Sichtfenster 12 versehen sein, das in Fig. 2 sichtbar ist, da diese Figur, wie gesagt, den geöffneten Zustand der Garraumtür 6 verdeutlicht. Das Sichtfenster 12 kann auf seiner Innenfläche entspiegelt sein, um Reflektionen zu verhindern. Die Außenfläche des Sichtfensters 12 kann farblich an die umgebenden Bleche des Türrahmens der Garraumtür angepasst werden. Bei der Ausführungsform gemäß Fig. 1 und 2 ist der optoelektronische Sensor 10 auf einem Gehäusevorsprung 13 angeordnet, der auf einer Gehäusestirnfläche 14 befestigt ist und von dieser vorragt, also in einen Bereich vor der gesamten Frontseite des Gargeräts 1 ragt. Durch diese Anordnung kann der Sensor 10 bei geöffneter Garraumtür 6 einen Erfassungsbereich E1 abdecken, der durch die strichpunktierte Linie verdeutlicht ist, in dem er noch nicht in den Garraum 3 eingebrachtes Gargut, wie das in Fig. 1 dargestellte Gargut bzw. Garprodukt GP, erfassen kann. Wird nach dem Einbringen eines Gargutträgers T mit darauf angeordnetem Gargut die Garraumtür 6 geschlossen, taucht der Sensor 10 mit seinem Gehäusevorsprung 13 in den Aufnahmebereich 11 des Garraumtürinnenraumes 9 ein und ist in diesem Zustand, in dem der Garraum 3 beheizt wird, vor der Wärmestrahlung des Garraums 3 geschützt. Beim Öffnen der Garraumtür kann zwar heiße Luft über den optoelektronischen Sensor 10 strömen, was im Falle des erfindungsgemäßen Gargeräts jedoch unkritisch ist, da diese Wärmeeinwirkung nur kurzfristig ist und die heiße Luft am Sensor vorbeistreicht und somit der optoelektronische Sensor 10 nicht merklich belastet wird.

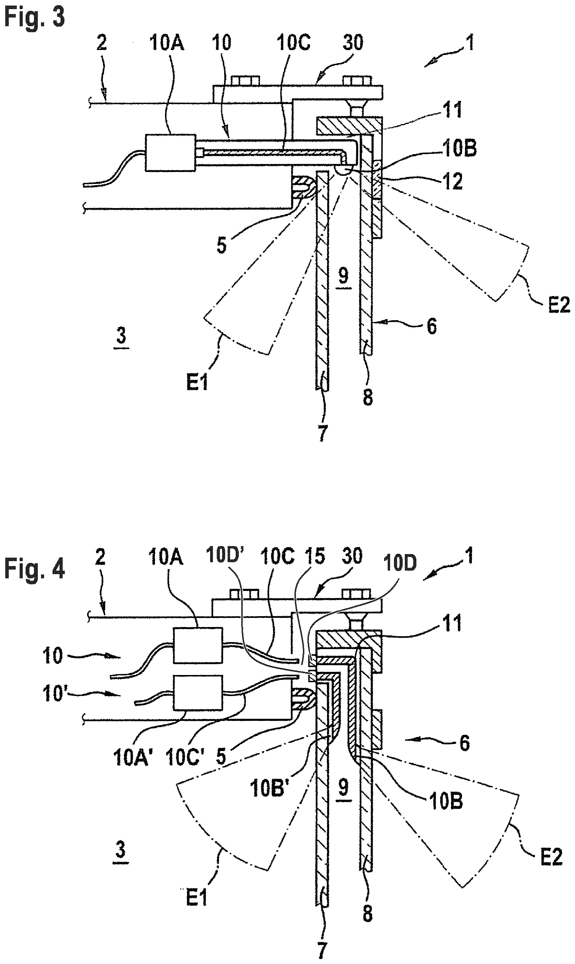

Fig. 3 verdeutlicht eine zweite Ausführungsform des erfindungsgemäßen Gargeräts 1 in einer schematisch stark vereinfachten Teildarstellung des Gargeräts 1. Aus dieser teilweise geschnittenen Darstellung wird zunächst die Ausbildung der Garraumtür 6 deutlicher, die aufgrund der Beabstandung der Innenscheibe 7 und der Außenscheibe 8 den Garraumtürinnenraum 9 aufweist. Die Garraumtür 6 kann beispielsweise schwenkbeweglich am Gehäuse 2 über ein Türscharnier 30 angelenkt sein.

Fig. 3 verdeutlicht den geschlossenen Zustand der Garraumtür 6, in dem die Innenscheibe 7 auf der umlaufenden Türdichtung 5 in einem Außenrandbereich der Innenscheibe 7 auf dieser aufliegt.

Hierbei verdeutlicht Fig. 3 erneut, dass der Aufnahmebereich 11 des Gartürinnenraumes 9 außerhalb der Türdichtung 5 liegt, so dass auch bei dieser Ausführungsform die Türdichtung 5 als Wärmeabschirmung dienen kann.

Bei der in Fig. 3 dargestellten zweiten Ausführungsform ist ein optoelektronischer Sensor 10 vorgesehen, der ein Sensorgehäuse 10A und ein Sensorauge 10B aufweist. Das Sensorgehäuse 10A ist hierbei im Gehäuse 2 und außerhalb des Garraums 3 angeordnet, also in einem kühlen Bereich. Das Sensorauge 10B, das beispielsweise eine Optik in Form einer optischen Linse sein kann, ist hierbei im Aufnahmebereich 11 angeordnet und wird ebenso durch die Türdichtung 5 thermisch abgeschirmt. Das Sensorauge 10B ist mit dem Sensorgehäuse 10A bei der Ausführungsform gemäß Fig. 3 über ein Lichtleitkabel 10C verbunden, so dass das Sensorgehäuse 10A mit den in diesem angeordneten Bildaufnahmekomponenten noch besser vor einer thermischen Belastung geschützt ist, da nur das Sensorauge 10B im Aufnahmebereich 11 angeordnet ist. Der optoelektronische Sensor 10 kann auch als ein Endoskopiesystem ausgebildet sein. Die hierbei verwendeten Endoskopien können starre Endoskope, flexible Endoskope oder Videoendoskope sein. Die Basiskomponenten derartiger Endoskope sind Lichtquellen, Lichtleiter und Bildleiter. Hierzu weist die Lichtquelle einen Lichtleiterausgang auf, der mit einem Lichtleiter verbunden ist und zu einem Lichtleitereingang am Endoskopschaft führt. Das Endoskop weist ferner ein Okkular und einen Fokusring auf. Im Schaft des Endoskops können Glasfasern zur Lichtleitung sowie eine oder mehrere Objektivlinsen und eine oder mehrere Übertragungslinsen angeordnet sein. Für weitere Einzelheiten wird hiermit der Inhalt der Wikipediaseite "https://de.wikipedia.org/wiki/endoskop" durch Bezugnahme vollinhaltlich zum Offenbarungsgehalt vorliegender Anmeldung gemacht.

Fig. 3 verdeutlicht durch die strichpunktierten Linien E1 und E2 die Möglichkeit zur Überwachung des Garraums 3 als auch des Außenbereichs des Gargeräts 1, wie dies zuvor bereits anhand der Fig. 1 und 2 erläutert worden ist.

Die in Fig. 4 dargestellte dritte Ausführungsform des erfindungsgemäßen Gargeräts 1 entspricht weitestgehend derjenigen der Fig. 3 mit der Ausnahme, dass bei dieser Ausführungsform zwei optoelektronische Sensoren 10, 10' vorgesehen sind. Die beiden Sensorgehäuse 10A und 10A' sind hierbei wiederum im Gehäuse 2, also einem kühlen Bereich des Gargeräts 1, angeordnet und über zugeordnete Lichtleitkabel 10C, 10C' mit Sensoraugen 10B und 10B' verbunden, wobei die beiden Lichtleitkabel 10C und 10C' in einem Luftspalt 15 enden, der zwischen dem Gehäuse 2 und der Garraumtür 6 vorgesehen ist. Fig. 4 verdeutlicht hierbei, dass Einkopplungsoptiken 10D und 10D' ebenfalls im Luftspalt den Enden der Lichtleitkabel 10C und 10C' gegenüber angeordnet sind. Die beiden Sensoraugen 10B und 10B' sind die Endpunkte zugeordneter Lichtleitkörper, wobei das Sensorauge 10B auf der Innenfläche der Außenscheibe 8 aufliegt, während das Sensorauge 10B' auf der Innenfläche der Innenscheibe 7 aufliegt, so dass dieses den Erfassungsbereich E1 im Garraum 3 ergibt, während das Sensorauge 10B den Erfassungsbereich E2 im Außenbereich des Gargeräts 1 ergibt. Bei dieser Ausführungsform können die Sensoraugen 10B und 10B' vorzugsweise als Optik ausgebildet sein, wie z.B. als Linse, insbesondere als Weitwinkellinse. Obwohl bei der besonders bevorzugten Ausführungsform der Fig. 4 zwei optoelektronische Sensoren 10, 10' vorgesehen sind, ist es auch möglich, lediglich einen dieser beiden optoelektronischen Sensoren in der zuvor beschriebenen Art und Weise vorzusehen. Die Art und Weise der Ausbildung der Optik des erfindungsgemäßen Gargerätes obliegt hierbei dem Fachmann auf dem Gebiet optischer Systeme, insbesondere Endoskopiesysteme.

Da bei dieser Ausführungsform die beiden Gehäuse 10A und 10A' ohnehin in einem kühlen Bereich des Gehäuses 2 vor thermischer Überhitzung geschützt sind, ist es ausreichend, dass bei der Ausführungsform gemäß Fig. 4 die Türdichtung 5 nur die jeweils oberen im Aufnahmebereich 11 angeordneten Teile der beiden Lichtleitkörper 10B und 10B' schützt.

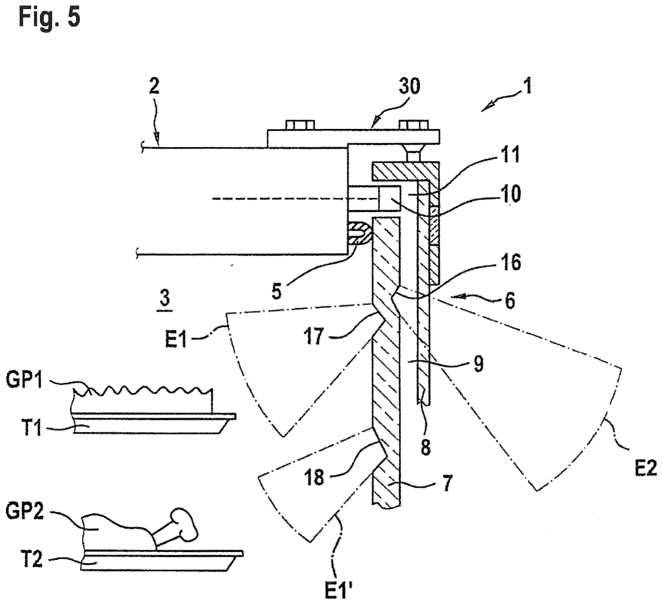

Fig. 5 zeigt eine vierte Ausführungsform des erfindungsgemäßen Gargeräts 1, die weitestgehend derjenigen der Fig. 3 entspricht. Der optoelektronische Sensor 10 ist bei dieser Ausführungsform allerdings in seiner Gesamtheit im Aufnahmeraum 11 angeordnet und wirkt mit der Innenscheibe 7 zusammen, die mit optischen Augen 16, 17 und 18 versehen ist. Hierdurch ergeben sich drei Erfassungsbereiche E1 und E1' im Garraum 3 und E2 außerhalb des Gargeräts 1. Diese optischen Augen 16, 17 und 18 können beispielsweise angeschliffene Flächen der Innenscheibe 7 sein, wie sich dies aus der zeichnerischen Darstellung der Fig. 5 ergibt.

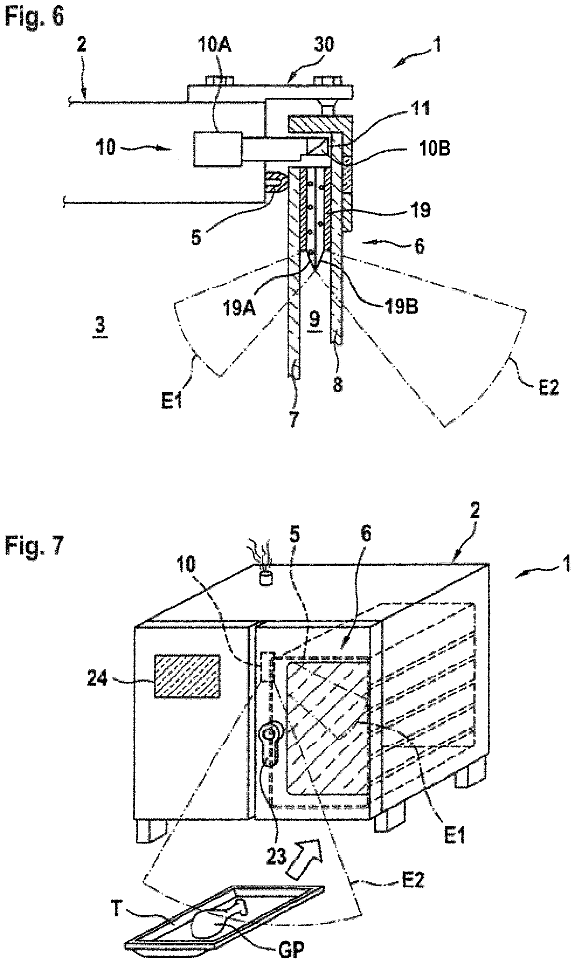

Fig. 6 zeigt eine fünfte Ausführungsform des erfindungsgemäßen Gargeräts 1, die weitestgehend derjenigen gemäß Fig. 3 entspricht. Auch hier ist ein optoelektronischer Sensor 10 vorgesehen, dessen Sensorgehäuse 10A im Gehäuse 2 angeordnet ist und über eine geeignete Lichtleiteinrichtung mit dem Sensorauge 10B in Wirkverbindung steht, das im Aufnahmebereich 11 angeordnet ist. Die Besonderheit dieser Ausführungsform besteht in einem geteilten Prisma 19, das im Garraumtürinnenraum 9 angeordnet ist. Dieses Prisma 9 weist zwei Lichtaustrittsflächen bzw. Auskopplungspunkte 19A und 19B auf, die im Falle des Auskopplungspunktes 19A auf den Garraum 3 gerichtet ist, während der Auskopplungspunkt 19B auf den Außenbereich des Gargeräts 1 gerichtet ist, was wiederum die Erfassungsbereiche E1 bzw. E2 ergibt.

Die sechste Ausführungsform des erfindungsgemäßen Gargeräts 1 gemäß Fig. 7 soll lediglich verdeutlichen, dass es möglich ist, einen optoelektrischen Sensor 10 nicht nur oberhalb der Türdichtung 5, sondern auch seitlich von dieser anzuordnen, wie im Beispielsfalle aufgrund der in Fig. 7 gewählten Darstellung linksseitig von dem linken Längsbereich der Türdichtung 5.

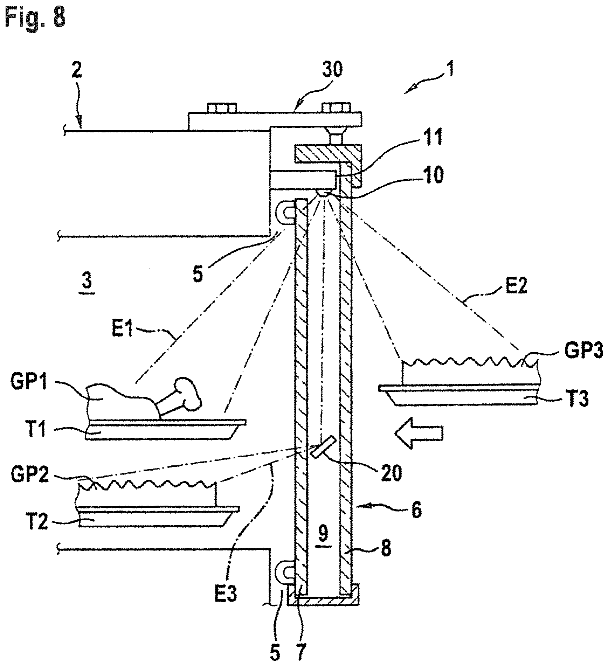

Die siebte Ausführungsform des erfindungsgemäßen Gargeräts 1 gemäß Fig. 8 entspricht im Wesentlichen derjenigen der Fig. 3, wobei zur Erreichung von zwei Erfassungsbereichen E1 und E3 im Garraum 3 ein Umlenkspiegel 20 vorgesehen ist, der im Garraumtürinnenraum 9 angeordnet ist. Dieser Umlenkspiegel 20 macht es möglich, durch den Erfassungsbereich E3 auch ein Garprodukt GP2 zu erfassen, das unterhalb des Garprodukts GP1 angeordnet ist, welches durch den Erfassungsbereich E1 erfasst wird. Ein derartiger Umlenkspiegel 20 kann plan oder sphärisch ausgebildet sein.

Der in Fig. 8 vorgesehene optoelektronische Sensor 10 kann wiederum so aufgebaut sein, wie anhand der Fig. 3 beschrieben oder es kann sich auch um eine Kamera handeln, die im Aufnahmebereich 11 angeordnet ist, was einer Anordnung gemäß Fig. 5 entspricht.

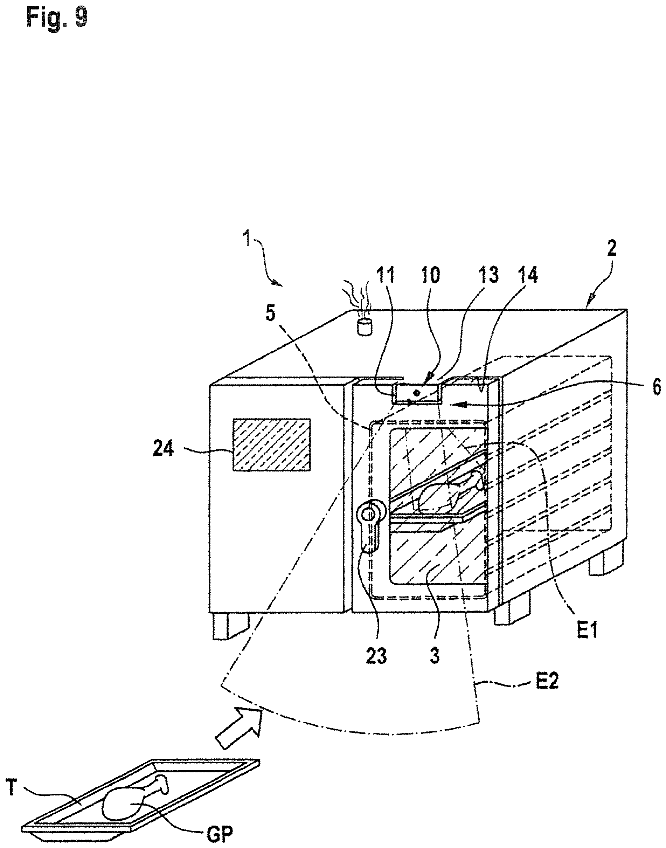

Die achte Ausführungsform des erfindungsgemäßen Gargeräts 1 gemäß Fig. 9 entspricht im Wesentlichen derjenigen der Fig. 1, wobei dementsprechend wiederum ein optoelektronischer Sensor 10, beispielsweise in Form einer Kamera, im Gehäusevorsprung 13 angeordnet ist. Dieser Gehäusevorsprung 13 ragt im geschlossenen Zustand der Garraumtür 6 in den in diesem Ausführungsbeispiel oben offenen Aufnahmebereich 11 des Garraumtürinnenraums 9, wie sich dies aus der Darstellung der Fig. 9 erschließt.

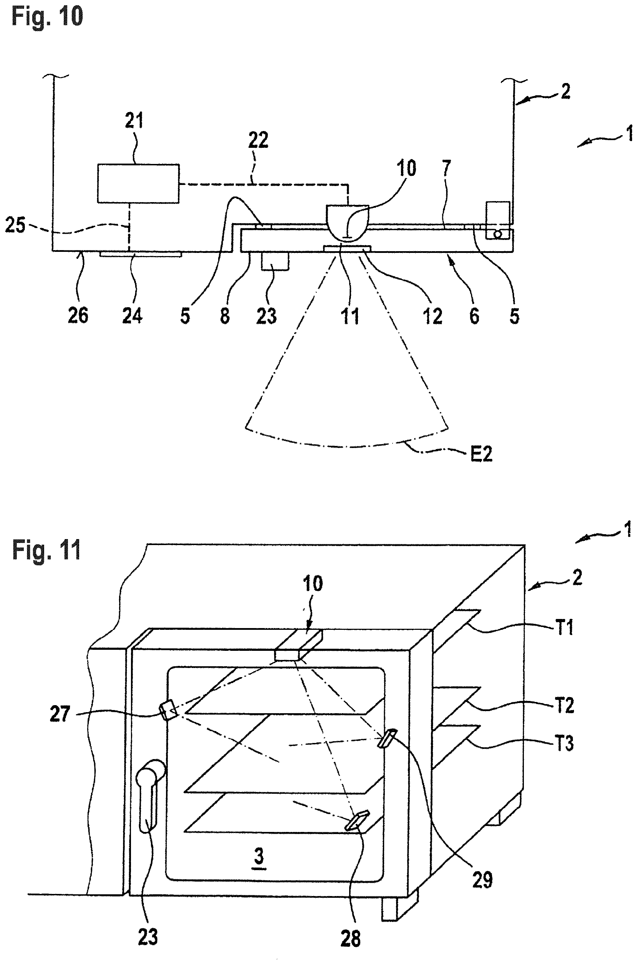

Die neunte Ausführungsform des erfindungsgemäßen Gargeräts 1 gemäß Fig. 10 dient im Wesentlichen zur Verdeutlichung, dass der optoelektronische Sensor 10, der wiederum im Aufnahmebereich 11, durch die Türdichtung 5 thermisch geschützt, angeordnet ist, über eine geeignete Datenleitung 22 mit einer Gerätesteuerung bzw. Gerätereglung 21 in Signalverbindung bzw. Datenverbindung stehen kann. Diese Steuerung/Regelung 21 kann über eine weitere Datenleitung mit einem User-Interface 24 in Wirkverbindung stehen, das auf einer Gerätefrontseite 26 des Gehäuses 2 angebracht sein kann. Diese Verbindung des Sensors 10 mit einer Steuerung/Regelung, die wiederum mit einem User-Interface in Datenverbindung steht, ist natürlich auch bei allen anderen zuvor beschriebenen Ausführungsformen technisch möglich, was bei den zuvor beschriebenen Ausführungsformen in den Fig. 1, 2, 7 und 9 jeweils durch die Darstellung des User-Interfaces 24 symbolisiert ist. Wie gesagt, ist diese Ausführungsform der Fig. 10 jedoch auch bei den Ausführungsformen der Fig. 3 bis 6 und 9 möglich.

Fig. 11 zeigt eine letzte Ausführungsform des erfindungsgemäßen Gargerätes 1 in ebenfalls schematisch stark vereinfachter Darstellung. Durch diese Darstellung soll lediglich verdeutlicht werden, dass es möglich ist, im Garraum 3 einen oder eine Mehrzahl von Umlenkspiegeln 27, 28, 29 vorzusehen, um entsprechende Strahlengänge zu ermöglichen, was durch die strichpunktierten Linien symbolisiert ist. Ansonsten kann es sich bei der Ausführungsform gemäß Fig. 11 um eine der zuvor beschriebenen Ausführungsformen gemäß den Fig. 1 bis 10 handeln.

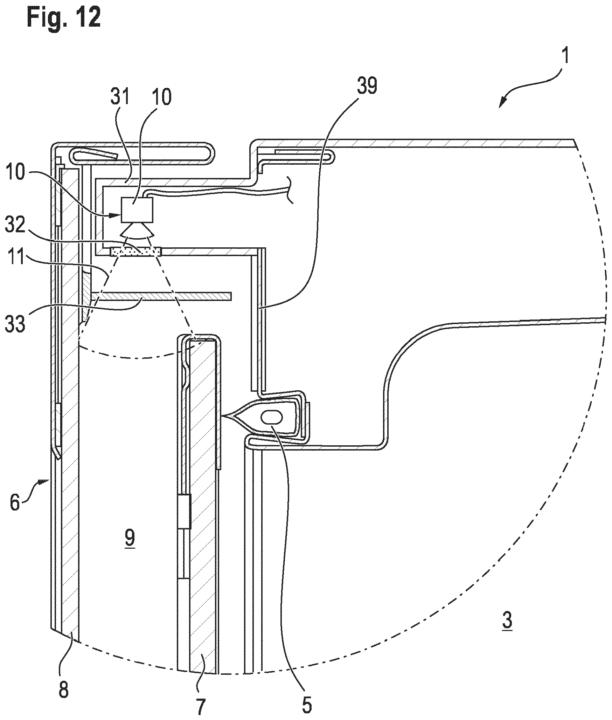

In Fig. 12 ist eine weitere besonders bevorzugte Ausführungsform des erfindungsgemäßen Gargeräts 1 in einem Teilschnitt dargestellt. Bei dieser Ausführungsform ist der optische Sensor 10 in einem Gehäuse 31 angeordnet, das im Aufnahmeraum 11 fixiert ist. Wie Fig. 12 verdeutlicht, kann dieses Gehäuse 31 mit einem Sichtfenster 32 versehen sein, das dem optischen Sensor 10 gegenüber angeordnet ist.

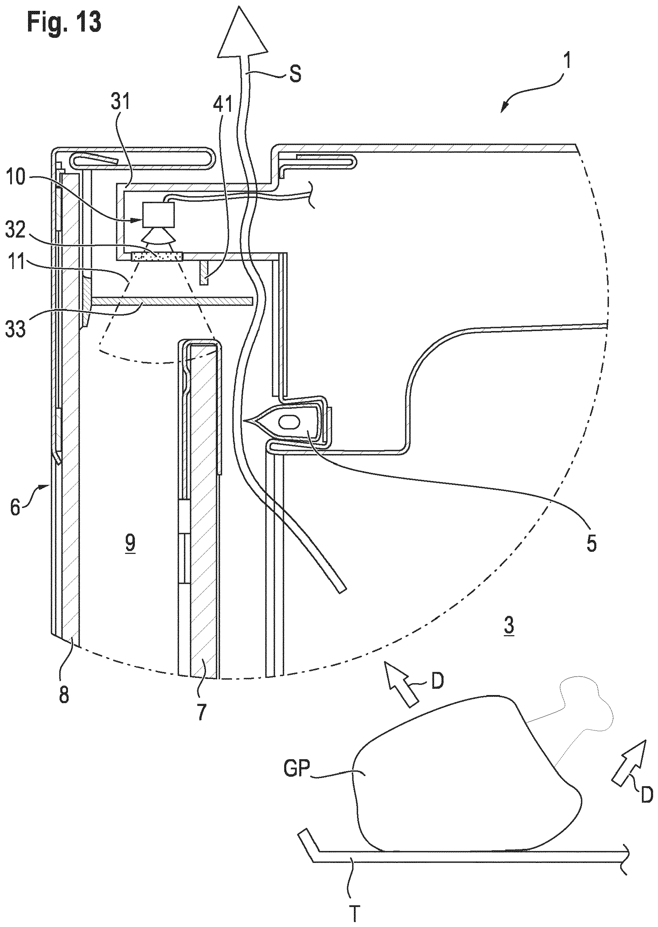

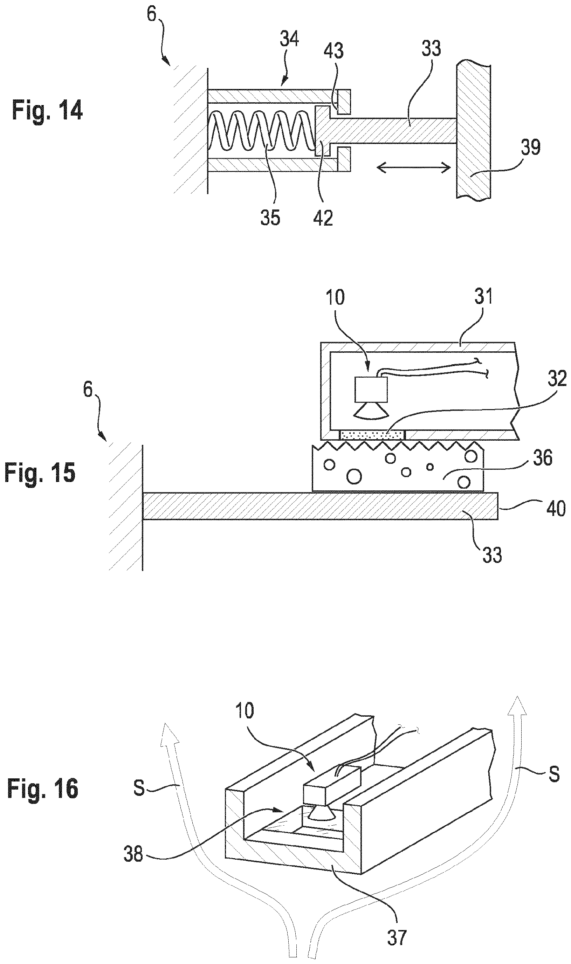

Ferner ist eine Abweisplatte 33 unterhalb des Gehäuses 31 im Aufnahmeraum 11 angeordnet. Diese Abweisplatte (Abweisblech) kann bevorzugterweise durchsichtig sein, also beispielsweise aus Glas bestehen. Die Abweisplatte 33 dient dazu, am Ende eines Garprozesses beim Öffnen der Garraumtür 6 eine Verschmutzung des optischen Sensors 10, im Beispielsfalle eine Verschmutzung des Sichtfensters 32, falls ein solches vorgesehen ist, zu verhindern, indem eine gerichtete Strömung S (s. hierzu auch Fig. 16, die den Verlauf der Strömung S um eine Abweiseinrichtung 37 verdeutlicht) der aus dem Garraum 3 austretenden Schwaden zu erzeugen, die in Fig. 13 sichtbar ist. Fig. 13 zeigt die Garraumtür 6 in einem leicht geöffneten Zustand, beispielsweise einer Anlüftstellung, in der sich die Innenscheibe 7 von der Türdichtung 5 abhebt, so dass es möglich ist, dass die Strömung S, die aus Luft und vom Garprodukt GP abgegebenen Dämpfen D gebildet wird, gezielt am Sichtfenster 32, oder falls kein Sichtfenster und kein Gehäuse 31 vorgesehen ist, gezielt am optischen Sensor 10 vorbeigeleitet wird, so dass vermieden werden kann, dass der optische Sensor 10 durch die Strömung S bzw. Schwaden S verschmutzt wird, beispielsweise durch Fettablagerungen. Ferner verdeutlicht Fig. 13 ein zusätzliches Ableitelement 41, das am Gehäuse 31 benachbart zum Sichtfenster 32 angeordnet ist und im Beispielsfalle im rechten Winkel von der jeweiligen Gehäusewand des Gehäuses 31 absteht. Dadurch ist es möglich, Fettablagerungen F in einem Bereich außerhalb des Sichtfensters 32 zurückzuhalten, so dass das Sichtfenster 32 nicht durch derartige Ablagerungen verschmutzt wird.

Fig. 14 zeigt in schematisch stark vereinfachter Darstellung eine weitere besonders bevorzugte Ausführungsform der Abweisplatte 33, die in diesem Falle durch eine Druckfeder 35 vorgespannt ist, die, wie auch die Abweisplatte 33, in einer Führung 34 geführt ist, die beispielsweise als Führungshülse ausgebildet sein kann. Dadurch wird es möglich, dass bei leicht geöffneter Garraumtür 6, wie dies in Fig. 14 dargestellt ist, die Feder 35 die Abweisplatte 33 in Richtung auf eine innere Gehäusewand 39 drückt, so dass sich die Abweisplatte 33 an die Gehäusewand 39 anlegen kann. Fig. 14 verdeutlicht ferner in schematisch vereinfachter Art und Weise einen Anschlag 42, der am freien Ende der Abweisplatte 33 angeordnet ist und in der Führung 34 vorgesehen ist. Dieser Anschlag 42 wirkt mit einem Anschlag bzw. einem Gegenanschlag 43 an der Führung 34 zusammen und verhindert, dass die Abweisplatte 33 aus der Führung 34 herausrutschen kann.

Fig. 15 zeigt eine Ausführungsform der Abweisplatte 33, die in ihrem freien Endbereich 40 mit einem Reinigungsteil 36, beispielsweise in Form eines Reinigungspads, versehen ist. Da das Reinigungsteil 36 benachbart zum freien Endbereich 40 der Abweisplatte 33 angeordnet ist, ist das Reinigungsteil 36 im geschlossenen Zustand der Garraumtür 6 soweit im Innenraum des Gehäuses 2 angeordnet, dass das Sichtfenster 32, oder, falls kein Sichtfenster vorgesehen ist, der optische Sensor 10 nicht durch das Reinigungsteil 36 abgedeckt wird. Beim Öffnen der Garraum 6, wie dies in Fig. 15 dargestellt ist, bewegt sich jedoch das Reinigungsteil 36 am Sichtfenster 32 bzw., falls kein Sichtfenster 32 vorgesehen ist, so am Sensor 10 vorbei, dass entweder das Sichtfenster 32 oder der Sensor 10 durch das Reinigungsteil 36 gereinigt werden kann.

Fig. 16 verdeutlicht eine Ausführungsform einer Abweiseinrichtung 37 in Form eines U-Profils, das einen Innenbereich 38 aufweist, in dem der optischen Sensor 10 zumindest teilweise angeordnet ist. Natürlich besteht die Abweiseinrichtung 37 ebenfalls entweder aus durchsichtigem Material oder sie ist mit einem Sichtfenster, wie dem Sichtfenster 32, versehen.

### Bezugszeichenliste

- 1: Gargerät, insbesondere gewerbliches Gargerät
- 2: Gehäuse
- 3: Garraum
- 4: Garraumöffnung
- 5: Türdichtung
- 6: Garraumtür
- 7: Innenscheibe
- 8: Außenscheibe
- 9: Garraumtürinnenraum
- 10, 10': optischer Sensor, insbesondere Kamera
- 10A, 10A': Sensorgehäuse
- 10B, 10B': Sensorauge (Optik, optische Linse, Kameraobjektiv) / Endoskopiesysteme / optische Systeme
- 10C, 10C': Lichtleitkabel / Glasfaserkabel / Bildübertragungselement
- 10D, 10D': Einkoppelungsoptiken
- 10E: Prisma / Umlenkspiegel
- 11: Aufnahmebereich / Positionsbereich
- 12: Sichtfenster
- 13: Gehäusevorsprung
- 14: Gehäusestirnfläche
- 15: Luftspalt
- 16, 17, 18: optische Augen (Einkoppelpunkte)
- 19: Prisma
- 19A, 19B: Auskoppelungspunkte
- 20: Umlenkspiegel
- 21: Gerätesteuerung/Geräteregelung
- 22: Datenleitung
- 23: Garraumtürgriff
- 24: User-Interface
- 25: Datenleitung
- 26: Gerätefrontseite
- 27, 28, 29: Umlenkspiegel
- 30: Türscharnier
- 31: Gehäuse
- 32: Sichtfenster
- 33: Abweisplatte, Abweisblech, insbesondere durchsichtig
- 34: Führung, Führungshülse
- 35: Feder
- 36: Reinigungsteil, Reinigungspad
- 37: Abweiseinrichtung in Form eines U-Profils
- 38: Innenbereich
- 39: innere Gehäusewand
- 40: freier Endbereich von 33
- 41: zusätzliches Ableitelement
- 42: Anschlag an Abweisplatte 33
- 43: Anschlagplatte an Führung 34
- S: Schwaden/Strömung
- T1-T3: Gargutträger
- GP, GP2, GP2, GP3: Gargut, Garprodukt
- E1, E2, E3: Erfassungsbereiche

## Patentansprüche

1. Gargerät (1), insbesondere gewerbliches Gargerät
- mit einem Gehäuse (2),
- mit einem Garraum (3),
• der im Gehäuse (2) angeordnet ist, und
• der eine Garraumöffnung (4) aufweist, die von einer umlaufenden, auf der Türinnenseite und/oder einem Gehäusebereich benachbart zur Garraumöffnung (4) angeordneten, Türdichtung (5) umgeben ist und die mittels einer Garraumtür (6) öffenbar und schließbar ist,
• wobei die Garraumtür (6) eine dem Garraum (3) benachbarte Innenscheibe (7), die im geschlossenen Zustand der Garraumtür (6) an der Türdichtung (5) anliegt, und eine zur Innenscheibe (7) beabstandete Außenscheibe (8) aufweist, die mit der Innenscheibe (7) einen Garraumtürinnenraum (9) begrenzt, und
- mit einem optoelektronischen Sensor (10),
**dadurch gekennzeichnet, dass**
- der optoelektronische Sensor (10) im geschlossenen Zustand der Garraumtür (6) in einen Aufnahmebereich (11) des Garraumtürinnenraums (9) ragt, der außerhalb der Türdichtung (5) angeordnet ist, so dass die Türdichtung (5) als thermische Abschirmung für den im Aufnahmebereich 11 angeordneten Sensor 10 fungiert, und
- dass zumindest ein optoelektronischer Sensor (10) auf einem Gehäusevorsprung (13) des Gehäuses (2) angeordnet ist, der von einer Gerätestirnfläche (14) vorragt.

2. Gargerät (1), insbesondere gewerbliches Gargerät
- mit einem Gehäuse (2),
- mit einem Garraum (3),
• der im Gehäuse (2) angeordnet ist, und
• der eine Garraumöffnung (4) aufweist, die von einer umlaufenden, auf der Türinnenseite und/oder einem Gehäusebereich benachbart zur Garraumöffnung (4) angeordneten, Türdichtung (5) umgeben ist und die mittels einer Garraumtür (6) öffenbar und schließbar ist,
• wobei die Garraumtür (6) eine dem Garraum (3) benachbarte Innenscheibe (7), die im geschlossenen Zustand der Garraumtür (6) an der Türdichtung (5) anliegt, und eine zur Innenscheibe (7) beabstandete Außenscheibe (8) aufweist, die mit der Innenscheibe (7) einen Garraumtürinnenraum (9) begrenzt, und
- mit einem optoelektronischen Sensor (10),
**dadurch gekennzeichnet, dass**
- der optoelektronische Sensor (10) im geschlossenen Zustand der Garraumtür (6) in einen Aufnahmebereich (11) des Garraumtürinnenraums (9) ragt, der außerhalb der Türdichtung (5) angeordnet ist, so dass die Türdichtung (5) als thermische Abschirmung für den im Aufnahmebereich 11 angeordneten Sensor 10 fungiert, und
- dass der optoelektronische Sensor (10) ein Sensorgehäuse (10A) und ein Sensorauge (10B) aufweist, wobei das Sensorauge (10B) über ein Lichtleitkabel (10C) mit dem Sensorgehäuse (10A) verbunden ist und wobei das Sensorauge (10B) im Aufnahmebereich (11) und das Sensorgehäuse (10A) im Gehäuse (2) angeordnet ist.

3. Gargerät nach Anspruch 1 oder 2, **dadurch gekennzeichnet, dass** der Aufnahmebereich (11) mit einem Sichtfenster (12) versehen ist.

4. Gargerät nach Anspruch 1, **dadurch gekennzeichnet, dass** zumindestens zwei optoelektronische Sensoren (10) auf dem Gehäusevorsprung (13) des Gehäuses (2) angeordnet sind.

5. Gargerät nach Anspruch 4, **dadurch gekennzeichnet, dass** der Gehäusevorsprung (13) beim Schließen der Garraumtür (6) in den Aufnahmebereich (11) eintaucht.

6. Gargerät nach Anspruch 1, **dadurch gekennzeichnet, dass** der Aufnahmebereich (11) des Garraumtürinnenraums (9) oben offen ausgebildet ist.

7. Gargerät nach Anspruch 2, **dadurch gekennzeichnet, dass** zwei Sensorgehäuse (10A, 10A') im Gehäuse (2) und zwei Sensoraugen (10B, 10B') im Aufnahmebereich (11) vorgesehen sind, wobei die Sensorgehäuse (10A, 10A') mit je einem Lichtleitkabel (10C, 10C') gekoppelt sind, die bis zu einem Luftspalt (15) zwischen dem Gehäuse (2) und dem Aufnahmebereich (11) reichen.

8. Gargerät nach einem der Ansprüche 1 oder 2, **dadurch gekennzeichnet, dass** die Innenscheibe (7) mit optischen Augen (16, 17, 18) in Form angeschliffener Flächen der Innenscheibe (7) versehen ist.

9. Gargerät nach Anspruch 2, **dadurch gekennzeichnet, dass** im Garraumtürinnenraum ein Prisma (19) angeordnet ist, das zwei Lichtaustrittsflächen bzw. Auskoppelpunkte (19A, 19B) aufweist, wobei der Auskoppelpunkt (19A) auf den Garraum (3) gerichtet ist, während der Auskoppelpunkt (19B) auf einen Außenbereich des Gargeräts (1) gerichtet ist.

10. Gargerät nach Anspruch 1 oder 2, **dadurch gekennzeichnet, dass** im Garraumtürinnenraum (9) ein Umlenkspiegel (20) zur Bildung eines Erfassungsbereichs (E3) angeordnet ist, durch den ein Garprodukt (GP2), das unterhalb eines Garprodukts (GP1) angeordnet ist, erfassbar ist.

11. Gargerät nach einem der Ansprüche 1 bis 10, **dadurch gekennzeichnet, dass** der optoelektronische Sensor (10) über eine Datenleitung (22) mit einer Gerätesteuerung/Geräteregelung (21) in Wirkverbindung steht, die im Gehäuse (2) angeordnet ist.

12. Gargerät nach Anspruch 11, **dadurch gekennzeichnet, dass** die Gerätesteuerung/Geräteregelung (21) über eine weitere Datenleitung (25) mit einem an einer Gerätefrontseite (26) angeordneten User-Interface (24) in Wirkverbindung steht.

13. Gargerät nach einem der Ansprüche 1 bis 12, **dadurch gekennzeichnet, dass** in der Garraumtür (6) und/oder im Garraum (3) Umlenkspiegel (27, 28, 29) angeordnet sind.

14. Gargerät nach Anspruch 2, **dadurch gekennzeichnet, dass** der optoelektronische Sensor (10, 10') als Kamera mit einem Kameragehäuse (10A, 10A') und einem Kameraobjektiv als Sensorauge (10B, 10B') ausgebildet ist.

15. Gargerät nach Anspruch 1, **dadurch gekennzeichnet, dass** der optische Sensor (10) in einem Gehäuse (31) angeordnet ist, das im Aufnahmeraum (11) fixierbar ist.

16. Gargerät nach Anspruch 15, **dadurch gekennzeichnet, dass** das Gehäuse (31) mit einem Sichtfenster (32) versehen ist.

17. Gargerät nach Anspruch 1, **gekennzeichnet durch** eine Abweiseinrichtung (33; 37) zur Verhinderung einer Verschmutzung des optischen Sensors (10), die benachbart zum optischen Sensor im Aufnahmebereich (11) angeordnet ist.

18. Gargerät nach Anspruch 17, **dadurch gekennzeichnet, dass** die Abweiseinrichtung (33) als Abweisplatte ausgebildet ist, die federbelastet ist.

19. Gargerät nach Anspruch 17 oder 18, **dadurch gekennzeichnet, dass** die Abweiseinrichtung (33) mit einem Reinigungsteil (36) versehen ist.

20. Gargerät nach einem der Ansprüche 17 bis 19, **dadurch gekennzeichnet, dass** die Abweiseinrichtung (37) als U-Profil ausgebildet ist.

## Claims

1. Cooking appliance (1), in particular commercial cooking appliance, comprising
- a housing (2),
- a cooking space (3),
• which is arranged in the housing (2), and
• which has a cooking space opening (4) which is surrounded by a circumferential door seal (5) arranged on the inside of the door and/or a housing area adjacent to the cooking space opening (4) and which can be opened and closed by means of a cooking space door (6),
• the cooking space door (6) having an inner pane (7) adjacent to the cooking space (3), which in the closed state of the cooking space door, (6) abuts against the door seal (5), and an outer pane (8) spaced apart from the inner pane (7), which together with the inner pane (7) delimits a cooking space door interior (9), and
- an optoelectronic sensor (10),
**characterized in that**
- in the closed state of the cooking space door (6), the optoelectronic sensor (10) projects into a receiving area (11) of the cooking space door interior (9), which is arranged outside the door seal (5), so that the door seal (5) functions as a thermal shielding for the sensor (10) arranged in the receiving area (11), and
- **in that** at least one optoelectronic sensor (10) is arranged on a housing projection (13) of the housing (2) which projects from an appliance end face (14).

2. Cooking appliance (1), in particular commercial cooking appliance, comprising
- a housing (2),
- a cooking space (3),
• which is arranged in the housing (2), and
• which has a cooking space opening (4) which is surrounded by a circumferential door seal (5) arranged on the inside of the door and/or a housing area adjacent to the cooking space opening (4) and which can be opened and closed by means of a cooking space door (6),
• the cooking space door (6) having an inner pane (7) adjacent to the cooking space (3), which in the closed state of the cooking space door (6) abuts against the door seal (5), and an outer pane (8) spaced apart from the inner pane (7), which together with the inner pane (7) delimits a cooking space door interior (9), and
- an optoelectronic sensor (10),
**characterized in that**
- in the closed state of the cooking space door (6), the optoelectronic sensor (10) projects into a receiving area (11) of the cooking space door interior (9), which is arranged outside the door seal (5), so that the door seal (5) functions as a thermal shielding for the sensor (10) arranged in the receiving area (11), and
- **in that** the optoelectronic sensor (10) comprises a sensor housing (10A) and a sensor eye (10B), the sensor eye (10B) being connected to the sensor housing (10A) via a fiberoptic cable (10C), and the sensor eye (10B) being arranged in the receiving area (11) and the sensor housing (10A) being arranged in the housing (2).

3. Cooking appliance according to claim 1 or 2, **characterized in that** the receiving area (11) is provided with a viewing window (12).

4. Cooking appliance according to claim 1, **characterized in that** at least two optoelectronic sensors (10) are arranged on the housing projection (13) of the housing (2).

5. Cooking appliance according to claim 4, **characterized in that** the housing projection (13) dips into the receiving area (11) when closing the cooking space door (6).

6. Cooking appliance according to claim 1, **characterized in that** the receiving area (11) of the cooking space door interior (9) is designed open at the top.

7. Cooking appliance according to claim 2, **characterized in that** two sensor housings (10A, 10A') are provided in the housing (2) and two sensor eyes (10B, 10B') are provided in the receiving area (11), wherein the sensor housings (10A, 10A') are each coupled to a fiberoptic cable (10C, 10C') extending to an air gap (15) between the housing (2) and the receiving area (11).

8. Cooking appliance according to one of the claims 1 or 2, **characterized in that** the inner pane (7) is provided with optical eyes (16, 17, 18) in the form of grinded surfaces of the inner pane (7).

9. Cooking appliance according to claim 2, **characterized in that** a prism (19) is arranged in the cooking space door interior, which prism has two light exit surfaces or decoupling points (19A, 19B), wherein the decoupling point (19A) is directed towards the cooking space (3), while the decoupling point (19B) is directed towards an exterior of the cooking appliance (1).

10. Cooking appliance according to claim 1 or 2, **characterized in that** a deflection mirror (20) is arranged in the cooking space door interior (9) to form a detection area (E3) via which a cooking product (GP2) arranged below a cooking product (GP1) can be detected.

11. Cooking appliance according to one of the claims 1 to 10, **characterized in that** the optoelectronic sensor (10) is operatively connected via a data line (22) to an appliance control/appliance regulation (21) arranged in the housing (2).

12. Cooking appliance according to claim 11, **characterized in that** the appliance control/appliance regulation (21) is operatively connected via a further data line (25) to a user interface (24) arranged on an appliance front side (26).

13. Cooking appliance according to one of Claims 1 to 12, **characterized in that** deflecting mirrors (27, 28, 29) are arranged in the cooking space door (6) and/or in the cooking space (3).

14. Cooking appliance according to claim 2, **characterized in that** the optoelectronic sensor (10, 10 ') is designed as a camera with a camera housing (10A, 10A') and a camera lens as a sensor eye (10B, 10B ').

15. Cooking appliance according to claim 1, **characterized in that** the optical sensor (10) is arranged in a housing (31) which can be fixed in the receiving area (11).

16. Cooking appliance according to claim 15, **characterized in that** the housing (31) is provided with a viewing window (32).

17. Cooking appliance according to claim 1, **characterized by** a deflector (33; 37) for preventing contamination of the optical sensor (10), which is arranged adjacent to the optical sensor in the receiving area (11).

18. Cooking appliance according to claim 17, **characterized in that** the deflector device (33) is formed as a deflector plate which is spring-loaded.

19. Cooking appliance according to claim 17 or 18, **characterized in that** the deflector (33) is provided with a cleaning member (36).

20. Cooking appliance according to one of the claims 17 to 19, **characterized in that** the deflector (37) is formed as a U-profile.

## Revendications

1. Appareil de cuisson (1), en particulier appareil de cuisson industriel,
- avec un boîtier (2),
- avec un espace de cuisson (3),
- - qui est disposé dans le boîtier (2) et
- - qui présente une ouverture d'espace de cuisson (4), qui est entourée par un joint d'étanchéité de porte (5) périphérique disposé sur le côté intérieur de porte et/ou sur une zone de boîtier de manière adjacente par rapport à l'ouverture d'espace de cuisson (4) et qui peut être ouverte et fermée au moyen d'une porte d'espace de cuisson (6),
- - dans lequel la porte d'espace de cuisson (6) présente une vitre intérieure (7) adjacente à l'espace de cuisson (3), qui repose sur le joint d'étanchéité de porte (5) dans l'état fermé de la porte d'espace de cuisson (6), et une vitre extérieure (8) tenue à distance par rapport à la vitre intérieure (7), qui délimite un espace intérieur de porte d'espace de cuisson (9) avec la vitre intérieure (7), et
- avec un capteur optoélectronique (10),
**caractérisé en ce que**
- le capteur optoélectronique (10) dépasse, dans l'état fermé de la porte d'espace de cuisson (6), dans une zone de logement (11) de l'espace intérieur de porte d'espace de cuisson (9), qui est disposée à l'extérieur du joint d'étanchéité de porte (5) de sorte que le joint d'étanchéité de porte (5) fait office d'écran de protection thermique pour le capteur (10) disposé dans la zone de logement (11), et
- qu'au moins un capteur optoélectronique (10) est disposé sur une partie faisant saillie de boîtier (13) du boîtier (2), qui fait saillie d'une face frontale d'appareil (14).

2. Appareil de cuisson (1), en particulier appareil de cuisson industriel,
- avec un boîtier (2),
- avec un espace de cuisson (3),
- - qui est disposé dans le boîtier (2), et
- - qui présente une ouverture d'espace de cuisson (4), qui est entourée par un joint d'étanchéité de porte (5) périphérique disposé sur le côté intérieur de porte et/ou sur une zone de boîtier de manière adjacente par rapport à l'ouverture d'espace de cuisson (4) et qui peut être ouverte et fermée au moyen d'une porte d'espace de cuisson (6),
- - dans lequel la porte d'espace de cuisson (6) présente une vitre intérieure (7) adjacente à l'espace de cuisson (3), qui repose sur le joint d'étanchéité de porte (5) dans l'état fermé de la porte d'espace de cuisson (6), et une vitre extérieure (8) tenue à distance par rapport à la vitre intérieure (7), qui délimite un espace intérieur de porte d'espace de cuisson (9) avec la vitre intérieure (7), et
- avec un capteur optoélectronique (10),
**caractérisé en ce que**
- le capteur optoélectronique (10) dépasse, dans l'état fermé de la porte d'espace de cuisson (6), dans une zone de logement (11) de l'espace intérieur de porte d'espace de cuisson (9), qui est disposée à l'extérieur du joint d'étanchéité de porte (5) de sorte que le joint d'étanchéité de porte (5) fait office d'écran de protection thermique pour le capteur (10) disposé dans la zone de logement (11), et
- que le capteur optoélectronique (10) présente un boîtier de capteur (10A) et un oeil de capteur (10B), dans lequel l'œil de capteur (10B) est relié au boîtier de capteur (10A) par l'intermédiaire d'un câble à fibres optiques (10C), et dans lequel l'œil de capteur (10B) est disposé dans la zone de logement (11) et le boîtier de capteur (10A) est disposé dans le boîtier (2).

3. Appareil de cuisson selon la revendication 1 ou 2, **caractérisé en ce que** la zone de logement (11) est pourvue d'une fenêtre d'inspection (12).

4. Appareil de cuisson selon la revendication 1, **caractérisé en ce qu'**au moins deux capteurs optoélectroniques (10) sont disposés sur la partie faisant saillie de boîtier (13) du boîtier (2).

5. Appareil de cuisson selon la revendication 4, **caractérisé en ce que** la partie faisant saillie de boîtier (13) s'enfonce dans la zone de logement (11) lors de la fermeture de la porte d'espace de cuisson (6).

6. Appareil de cuisson selon la revendication 1, **caractérisé en ce que** la zone de logement (11) de l'espace intérieur de porte d'espace de cuisson (9) est réalisée ouverte en haut.

7. Appareil de cuisson selon la revendication 2, **caractérisé en ce que** deux boîtiers de capteur (10A, 10A') sont prévus dans le boîtier (2) et deux yeux de capteur (10B, 10B') sont prévus dans la zone de logement (11), dans lequel les boîtiers de capteur (10A, 10A') sont couplés à respectivement un câble à fibres optiques (10C, 10C'), qui vont jusqu'à un entrefer (15) entre le boîtier (2) et la zone de logement (11).

8. Appareil de cuisson selon l'une quelconque des revendications 1 ou 2, **caractérisé en ce que** la vitre intérieure (7) est pourvue d'yeux optiques (16, 17, 18) sous la forme de faces affûtées de la vitre intérieure (7).

9. Appareil de cuisson selon la revendication 2, **caractérisé en ce qu'**est disposé dans l'espace intérieur de porte d'espace de cuisson un prisme (19), qui présente deux faces de sortie de lumière ou points de découplage (19A, 19B), dans lequel le point de découplage (19A) est dirigé sur l'espace de cuisson (3) tandis que le point de découplage (19B) est dirigé sur une zone extérieure de l'appareil de cuisson (1).

10. Appareil de cuisson selon la revendication 1 ou 2, **caractérisé en ce qu'**est disposé dans l'espace intérieur de porte d'espace de cuisson (9) un miroir de déviation (20) pour former une zone de détection (E3), par laquelle un produit de cuisson (GP2), qui est disposé sous un produit de cuisson (GP1), peut être détecté.

11. Appareil de cuisson selon l'une quelconque des revendications 1 à 10, **caractérisé en ce que** le capteur optoélectronique (10) coopère par l'intermédiaire d'une ligne de données (22) avec une commande d'appareil/régulation d'appareil (21), qui est disposée dans le boîtier (2).

12. Appareil de cuisson selon la revendication 11, **caractérisé en ce que** la commande d'appareil/régulation d'appareil (21) coopère par l'intermédiaire d'une autre ligne de données (25) avec une interface utilisateur (24) disposée sur un côté frontal d'appareil (26).

13. Appareil de cuisson selon l'une quelconque des revendications 1 à 12, **caractérisé en ce que** des miroirs de déviation (27, 28, 29) sont disposés dans la porte d'espace de cuisson (6) et/ou dans l'espace de cuisson (3).

14. Appareil de cuisson selon la revendication 2, **caractérisé en ce que** le capteur optoélectronique (10, 10') est réalisé en tant que caméra avec un boîtier de caméra (10A, 10A') et un objectif de caméra en tant qu'œil de capteur (10B, 10B').

15. Appareil de cuisson selon la revendication 1, **caractérisé en ce que** le capteur optique (10) est disposé dans un boîtier (31) qui peut être fixé dans l'espace de logement (11).

16. Appareil de cuisson selon la revendication 15, **caractérisé en ce que** le boîtier (31) est pourvu d'une fenêtre d'inspection (32).

17. Appareil de cuisson selon la revendication 1, **caractérisé par** un dispositif déflecteur (33 ; 37) pour empêcher un encrassement du capteur optique (10), qui est disposé de manière adjacente par rapport au capteur optique dans la zone de logement (11).

18. Appareil de cuisson selon la revendication 17, **caractérisé en ce que** le dispositif déflecteur (33) est réalisé en tant que panneau déflecteur qui est soumis à la contrainte d'un ressort.

19. Appareil de cuisson selon la revendication 17 ou 18, **caractérisé en ce que** le dispositif déflecteur (33) est pourvu d'une partie de nettoyage (36).

20. Appareil de cuisson selon l'une quelconque des revendications 17 à 19, **caractérisé en ce que** le dispositif déflecteur (37) est réalisé en tant que profil en U.
